# EUROPEAN PATENT APPLICATION

(11) **EP 4 027 496 A1**
(43) Date of publication of application: **13.07.2022**
(21) Application number: 20861718.3
(22) Date of filing: 20.08.2020
(51) Int. Cl.: H02K 5/24, H02K 3/50, H02K 11/33

(54) **MOTOR**

(30) Priority: 03.09.2019 JP 2019160618
(71) Applicant: Nidec Corporation, Minami-ku, Kyoto-shi, Kyoto 601-8205 (JP)
(72) Inventor: NODA, Shinichi, Kyoto-shi, Kyoto 601-8205 (JP)
(74) Representative: Viering, Jentschura & Partner mbB Patent- und Rechtsanwälte
(86) International application number: PCT/JP2020/031402
(87) International publication number: WO 2021/044853

(57) **Abstract**

A jumper wire is protected based on a vibration mode. A motor includes an outer frame that extends in a tubular shape, a stator that is fixed inside the outer frame, a plurality of wall portions that are formed integrally with the outer frame, protrude in a wall shape from an outer surface of the outer frame, and extend in a direction in which the outer frame extends, a connection portion that connects the plurality of wall portions to form an integral protrusion body, and windings that are wound around the stator in a distribution manner, and in which a jumper wire straddles a nearest neighbor location of an entire circumference of a core of the stator at a center of the integral protrusion body.

## Description

### TECHNICAL FIELD

The present invention relates to a motor.

### BACKGROUND ART

When a motor is operated, an electromagnetic force acts between a stator core and a rotor core, and thus, a frame vibrates. Since the electromagnetic force acts to narrow a gap and the stator core is pulled inward, the core is deformed. When a mode order of the electromagnetic force is low, the frame is easily deformed, and thus, vibration is caused. Further, when a frequency of the electromagnetic force matches or is close to a natural frequency of the frame depending on operating conditions, large vibration and noise are generated. Since a motor with a small number of poles generates a low-order electromagnetic force mode, vibration and noise are likely to occur.

As a method of reducing the vibration of the frame due to the electromagnetic force, a method for changing the natural frequency by processing the frame or processing a material is known as a technology of the related art in addition to increasing rigidity of the frame.

In the case of a distributed winding motor in which a coil (stator winding) is wound around a stator in a distribution manner, there are a location where the coil is firmly fixed inside a core slot and a location where the coil protrudes with a cantilever support structure. The location of the cantilever support structure is a location of a jumper wire where the coil crosses between the core slots. There is a concern that such a jumper wire causes a short circuit or the like due to vibration.

For example, Patent Literature 1 proposes a technology for firming integrating and fixing by bolts or binding strings by disposing an insulating ring on an outer peripheral side of a location of a jumper wire and disposing a holding plate on an inner peripheral side.

### CITATIONS LIST

### PATENT LITERATURE

Patent Literature 1: JP 60-186846 B

### SUMMARY OF INVENTION

### TECHNICAL PROBLEMS

However, the technology of the related art for the jumper wire causes an increase in a weight of the motor and an increase in cost.

Therefore, an object of the present invention is to protect a jumper wire based on a vibration mode.

### SOLUTIONS TO PROBLEMS

An aspect of a motor according to the present invention includes an outer frame that extends in a tubular shape, a stator that is fixed inside the outer frame, a plurality of wall portions that are formed integrally with the outer frame, protrude in a wall shape from an outer surface of the outer frame, and extend in a direction in which the outer frame extends, a connection portion that connects the plurality of wall portions to form an integral protrusion body, and windings that are wound around the stator in a distribution manner, and in which a jumper wire straddles a nearest neighbor location of an entire circumference of a core of the stator at a center of the integral protrusion body.

Another aspect of a motor according to the present invention includes an outer frame that has an inner peripheral surface extending in a cylindrical shape, an annular stator that is fitted into the outer frame, and windings that are wound around the annular stator in a distribution manner, and in which a jumper wire straddles a nearest neighbor location of an entire circumference of the annular stator at a node of an elliptical vibration mode generated in the outer frame.

### ADVANTAGEOUS EFFECTS OF INVENTION

According to the present invention, the jumper wire can be protected based on the vibration mode.

### BRIEF DESCRIPTION OF DRAWINGS

FIG. 1 is a cross-sectional view schematically illustrating a configuration of a motor according to an embodiment.
FIG. 2 is a vertical cross-sectional view schematically illustrating the configuration of the motor according to the present embodiment.
FIG. 3 is a diagram schematically illustrating a structure of a stator.
FIG. 4 is a diagram illustrating an 8-pole stator.
FIG. 5 is a perspective view illustrating a structure of a winding wound in a distribution manner.
FIG. 6 is a diagram illustrating an example of a jumper wire of each phase of UVW.
FIG. 7 is a diagram illustrating vibration generated in the motor.
FIG. 8 is a diagram illustrating a modification example including an accommodation box.
FIG. 9 is a diagram illustrating another modification example including an accommodation box.
FIG. 10 is a diagram illustrating a modification example including a leg portion.
FIG. 11 is a diagram illustrating the vibration of the motor in the modification example including the leg portion.
FIG. 12 is a diagram illustrating another modification example including the leg portion.
FIG. 13 is a diagram illustrating a modification example including both a terminal block and a leg portion.

### DESCRIPTION OF EMBODIMENT

Hereinafter, an embodiment of a motor of the present disclosure will be described in detail with reference to the accompanying drawings. However, in order to avoid the following description from being unnecessarily redundant and to make it easier for those skilled in the art to understand, a detailed description more than necessary may be omitted. For example, detailed description of well-known matters and duplicate description of a substantially equal configuration may be omitted.

In the present specification, an embodiment of the present disclosure will be described by using, as an example, a three-phase motor having three-phase (U-phase, V-phase, and W-phase) windings (may be referred to as "coils"). However, an n-phase motor having n-phase (n is an integer of 4 or more) windings such as four phases and five phases is also within the scope of the present disclosure.

### (Structure of Motor)

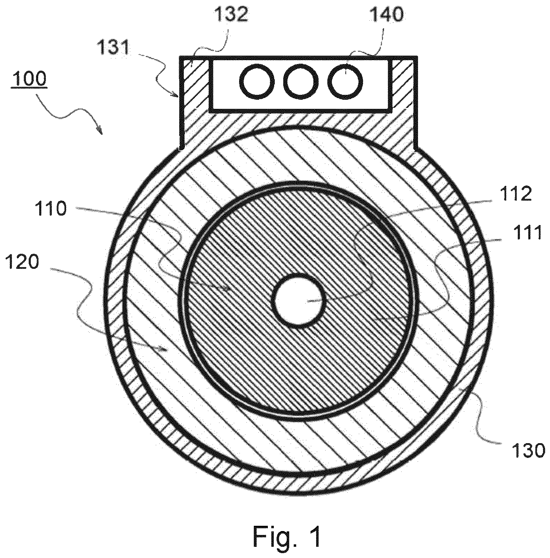

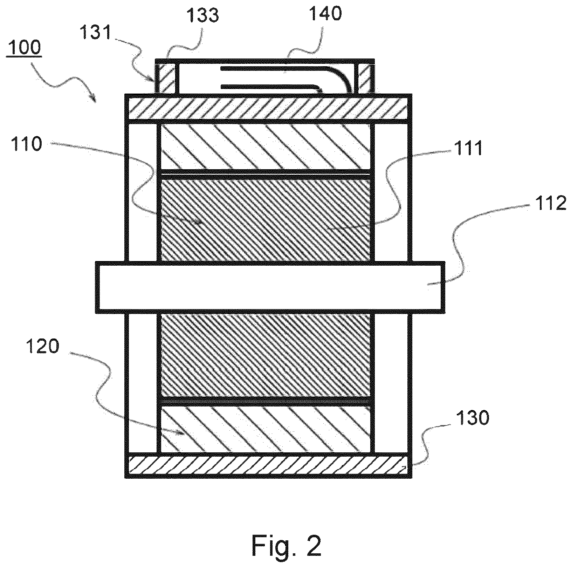

FIGS. 1 and 2 are diagrams schematically illustrating a configuration of the motor of the present embodiment. FIG. 1 is a cross-sectional view illustrating a cross section perpendicular to a rotation shaft of the motor, and FIG. 2 is a vertical cross-sectional view illustrating a cross section parallel to the rotation shaft of the motor.

A motor 100 includes a rotor 110 which is also called a rotor, a stator 120 which is also called a stator, and an outer frame 130 that extends in a tubular shape. The stator 120 is fixed in the outer frame 130. The rotor 110 is inserted inside the stator 120 and rotates inside the stator 120 about a rotation shaft 112. The stator 120 generates a rotating magnetic field, and the rotor 110 includes the rotation shaft 112 which is also called a shaft, and a rotor core 111 fixed to the rotation shaft 112, and may include magnets and windings (not illustrated) incorporated in the rotor core 111. The rotor core 111 is also called a rotor core and is generally made of a magnetic material containing iron. The rotor 110 receives stress from the rotating magnetic field and rotates about the rotation shaft 112.

A winding to be described later is wound around the stator 120, and has a terminal block 131 for pulling out and fixing an end portion 140 of the winding to the outside of the outer frame 130 is provided at a part of an outer periphery of the outer frame 130 having an approximately cylindrical shape. Although an auxiliary winding used only at the start of driving of the motor 100 may be used as the winding wound around the stator 120, the winding to be described below in the present specification is a winding that is also called a main winding for an auxiliary winding and is used at the time of normal driving of the motor 100.

The terminal block 131 has a box shape and has vertical walls 132 extending parallel to the rotation shaft of the motor and horizontal walls 133 extending perpendicular to the rotation shaft of the motor. The terminal block 131 is integrated with the outer frame 130, and a location of the outer frame 130 where the terminal block 131 is provided has higher rigidity than the other locations. The vertical walls 132 correspond to an example of a plurality of wall portions according to the present invention that are formed integrally with the outer frame 130, protrude in a wall shape from an outer surface of the outer frame 130, and extends in a direction in which the outer frame 130 extends. The horizontal walls 133 correspond to an example of connection portions according to the present invention in which the plurality of wall portions are connected to each other to form an integral protrusion body. In the example illustrated herein, the horizontal wall 133 projects in a wall shape from the outer surface of the outer frame 130 and extends in a direction of orbiting the outer frame 130. The terminal block 131 corresponds to an example of the protrusion body according to the present invention, and also forms an example of a drawing portion according to the present invention, in which the end portion of the winding is pulled out to the outside of the outer frame 130.

Regarding lengths in a direction parallel to the motor rotation shaft, of the rotor 110 and the stator 120 are shorter than the outer frame 130. The terminal block 131 has a length equal to or longer than the stator 120.

Here, a structure of the stator 120 will be further described.

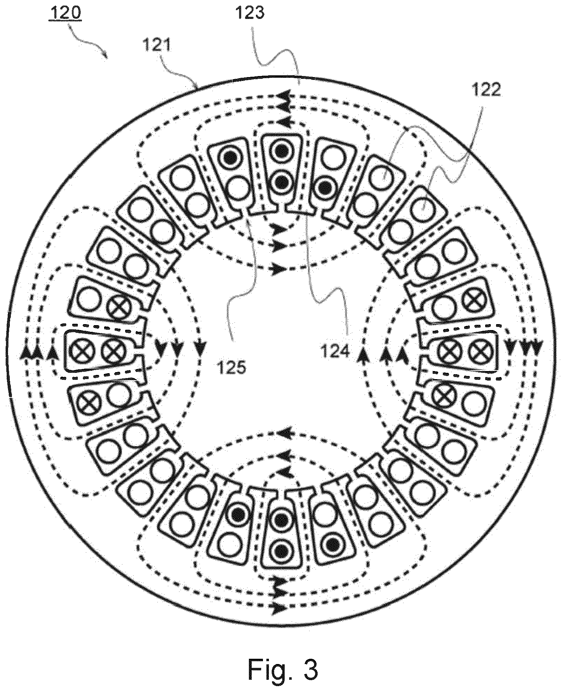

FIG. 3 is a diagram schematically illustrating the structure of the stator.

The stator 120 has a stator core 121 and windings 122. The stator core 121 is also called a core and is generally made of a magnetic material containing iron. The stator core 121 has a return portion 123 having an annular shape, tooth portions 124 protruding toward an inside from the return portion 123 (that is, a direction facing the rotor 110), and a groove portion 125 that is also called a slot extending between the tooth portions 124. FIG. 3 illustrates an example in which the groove portions are, for example, 24 slots. The tooth portions 124 and the groove portions 125 extend parallel to the rotation shaft of the motor 100 (that is, in a direction perpendicular to a paper surface of FIG. 3).

The winding 122 passes through the groove portion 125 and extends in the direction perpendicular to the paper surface of FIG. 3 over the entire length of the groove portion 125. A direction through which the winding 122 passes is indicated by a symbol in FIG. 3. However, FIG. 3 illustrates a direction of, for example, the U-phase winding 122 among the windings 122 of the UVW phases. In the example illustrated in FIG. 3, the winding 122 positioned in the vertical direction of the figure passes through the groove portion 125 toward the front side of the figure, and the winding 122 positioned in a left-right direction of the figure passes through the groove portion 125 toward a back side of the figure. The winding 122 passed through the groove portion 125 in this manner is connected to each other outside the groove portion 125. In the example illustrated in FIG. 3, the winding 122 positioned on an upper side of the figure is connected to the winding 122 positioned on a left side of the figure, and the winding 122 positioned on a lower side of the figure is connected to the winding 122 positioned on a right side of the figure. As a result, in the example of FIG. 3, the upper left and lower right of the figure are the inner portions surrounded by the winding 122. Since there are the plurality of tooth portions 124 within a range surrounded by the winding 122, the winding 122 is wound in a distribution manner.

For example, a current flows through the winding 122 connected as illustrated in FIG. 3 in the same direction as the direction in which the winding 122 passes through. As a result, as illustrated by dotted arrows in FIG. 3, since magnetic force lines are directed to the inside of the stator 120 at the upper left and lower right of the figure, the upper left and lower right of the figure are N poles as viewed from the rotor 110. Further, since the magnetic force lines are directed to the outside of the stator 120 at the upper right and lower left of the figure, the upper right and lower left of the figure are S poles as viewed from the rotor 110. That is, in the example illustrated in FIG. 3, since two N poles and two S poles are generated, the number of poles of the stator 120 is four poles.

The number of poles of the stator 120 is not limited to 4 poles, but may be two poles or eight poles depending on how the winding 122 passes and how the winding is connected.

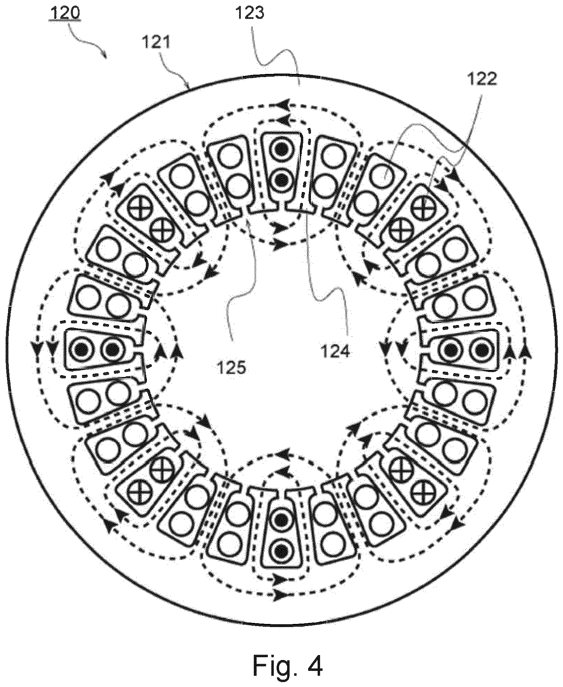

FIG. 4 is a diagram illustrating an 8-pole stator 120.

In FIG. 4, a direction is illustrated for, for example, the U-phase winding 122 among the windings 122 of the UVW phases.

In the case of the 8-pole stator 120, for example, the winding 122 faces a front side of the figure at four locations on the upper, lower, left, and right of the figure, and faces a back side of the figure at four locations of the upper left, lower left, upper right, and lower right of the figure. The winding 122 positioned on the upper side of the figure is connected to the winding 122 positioned on an upper left side of the figure, and the winding 122 positioned on the left side of the figure is connected to the winding 122 positioned on a lower left side of the figure. The other windings 122 are similarly connected, and as a result, magnetic force lines are generated as indicated by, for example, the dotted arrows in the figure. The four locations where the magnetic force lines are directed to the inside of the stator 120 are N poles as viewed from the rotor 110, and the four locations where the magnetic force lines are directed to the outside of the stator 120 are S poles as viewed from the rotor 110.

The winding 122 wound in the distribution manner has a jumper wire that straddles the plurality of tooth portions 124 outside the groove portions 125.

### (Structure of jumper wire)

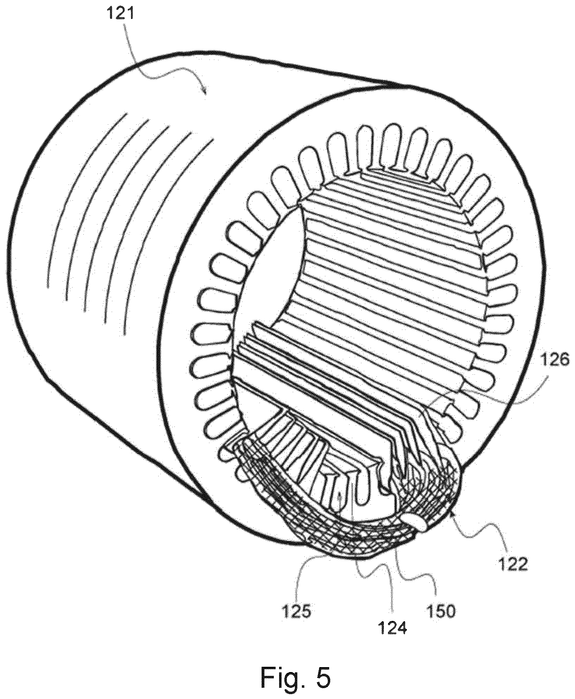

FIG. 5 is a perspective view illustrating a structure of the winding 122 as the winding wound in the distribution manner.

The winding 122 passes through the groove portion 125 of the stator core 121, and the groove portion 125 and the winding 122 are insulated from each other by an insulating paper 126. The winding 122 extending from the groove portion 125 to the other groove portion 125 straddles the plurality of tooth portions 124, and the plurality of windings 122 are bundled to form a jumper wire 150. The jumper wire 150 illustrated in FIG. 5 is, for example, the jumper wire 150 in the U-phase winding 122 among the windings 122 of the UVW phases.

As illustrated in FIG. 5, the jumper wire 150 protrudes from the stator core 121. Further, since the jumper wire 150 itself constitutes a part of the winding 122, a rotating magnetic field is generated. As a result, the jumper wire 150 may vibrate for the stator core 121 due to the stress caused by the rotating magnetic field. In order to suppress such vibration, the jumper wire 150 is tightly bundled. Further, the stator 120 also has the jumper wires 150 for the windings 122 of the UVW phases, and these windings are also bundled.

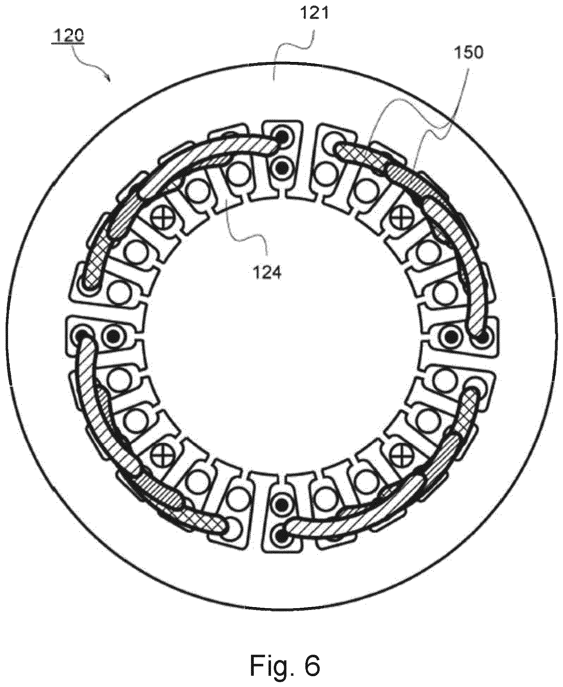

FIG. 6 is a diagram illustrating an example of the jumper wires 150 for the UVW phases.

In FIG. 6, the jumper wires 150 of the UVW phases are illustrated with different hatchings for the phases.

In the stator 120, there are a location where the jumper wires 150 overlap each other in each phase of UVW in the entire circumference of the stator core 121 and a location where the jumper wire 150 in any phase does not straddle the tooth portions 124. The jumper wires 150 that overlap each other are bundled by a fixture or the like and is fixed to each other. Thus, the vibration is suppressed. In the example illustrated in FIG. 6, the jumper wires 150 are grouped into four bundles.

Even when the jumper wires 150 are bundled together, the generation of the stress due to the rotating magnetic field is inevitable. Thus, the motor 100 vibrates, and in particular, a tubular structure in which the stator 120 and the outer frame 130 are combined vibrates. When this vibration is concentrated on a weak location of the jumper wire 150, the jumper wire 150 may be damaged.

### (Vibration Mode)

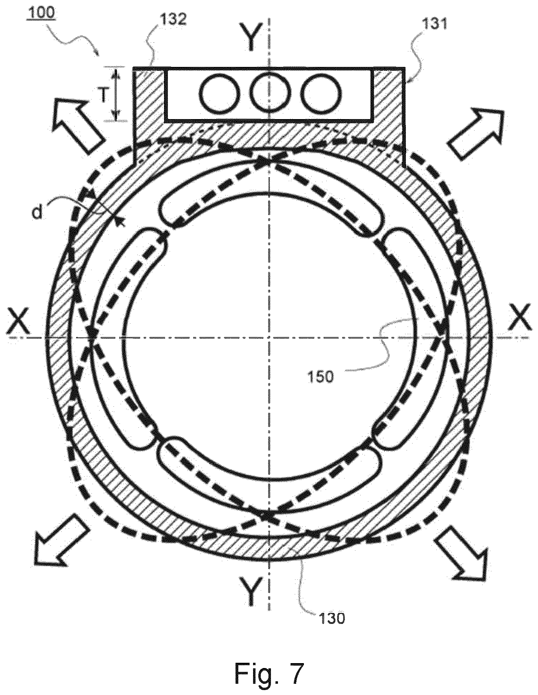

FIG. 7 is a diagram illustrating vibration generated in the motor 100.

In FIG. 7, the stator 120 and the rotor 110 are not illustrated. The tubular structure in which the stator 120 and the outer frame 130 are combined is represented by the illustration of the outer frame 130 and the jumper wire 150.

There are various vibration modes as the vibration generated in the stator 120 and the outer frame 130, and a vibration mode with a high load on the jumper wire 150 is an elliptical vibration mode. In FIG. 7, the elliptical vibration mode is illustrated by a dotted line. Further, an X-axis and a Y-axis are also illustrated for the sake of convenience in describing positions. An intersection (that is, an origin) of the X-axis and the Y-axis is a center of rotation of the motor. Further, the terminal block 131 is formed at a location of the outer frame 130 that intersects the Y-axis, and the X-axis extends in parallel with the terminal block 131.

Although the structure in which the stator 120 and the outer frame 130 are combined has the tubular shape, since the terminal block 131 is present in a part of the outer frame 130, only a part of the structure has high rigidity, and a position of a node of the elliptical vibration mode is fixed near a center of the terminal block 131 having high rigidity. That is, the terminal block 131 corresponds to an example of a rigidity increasing portion for fixing the node of the elliptical vibration mode generated in the outer frame 130 by being provided on a part of the outer frame 130 and increasing the rigidity of the part. As a result, the elliptical vibration mode vibrates greatly in an intermediate direction between the X-axis and the Y-axis, and the node of the elliptical vibration mode is generated on the axes of the X-axis and the Y-axis.

In the present embodiment, since the terminal block 131 is used as means for increasing the rigidity of the outer frame 130, it is not necessary to separately provide a reinforcing material or the like. As a result, the cost of the motor is reduced and the size of the motor is also reduced. Further, the number of parts of the motor is suppressed, and thus, the assembleability of the motor is also improved.

In order to fix the position of the node of the elliptical vibration mode in this manner, it is necessary to integrate the terminal block 131 with the outer frame 130. The "integration" means that the terminal block and the outer frame are formed as a seamless integral body by casting or the like or are firmly integrated by welding or the like, and does not include screwing or the like.

Further, in order for the position of the node of the elliptical vibration mode to be appropriately fixed, it is desirable that the terminal block 131 extends in a direction of orbiting the outer frame 130 by 80 degrees or more as viewed from the center of rotation which is an origin of the XY coordinates, and it is more desirable that the terminal block extends by 90 degrees or more.

Further, the vertical walls 132 of the terminal block 131 protrude from the outer surface of the outer frame 130 in the same direction as each other, and thus, the rigidity of the terminal block 131 increases as compared with a case where the vertical walls protrude in different directions, and the node of the elliptical vibration mode is appropriately fixed.

Further, in the direction in which the outer frame 130 extends (that is, a direction along the rotation shaft of the motor 100), as illustrated in FIG. 2, it is desirable that the terminal block 131 has a length equal to or longer than the stator core 121 or more (that is, the vertical walls 132 have a length equal to or longer than the stator core 121 or more). The terminal block 131 has such a length, and thus, the node of the elliptical vibration mode is more appropriately fixed.

Further, it is desirable that a height T in a direction in which the vertical walls 132 of the terminal block 131 protrude is at least twice a thickness d of the outer frame 130 than a highest point of the outer frame 130 in the direction (that is, a position in which the outer surface of the outer frame 130 protrudes most in the direction within the range of the terminal block 131). The vertical walls 132 have such a height T, and thus, sufficient rigidity is generated in the terminal block 131, and the node of the elliptical vibration mode is more appropriately fixed.

Further, as described above, the terminal block 131 has the box shape having the vertical walls 132 extending parallel to the rotation shaft of the motor and the horizontal walls 133 extending perpendicular to the rotation shaft of the motor, and thus, the terminal block 131 effectively improves the rigidity of the outer frame 130. As a result, the node of the elliptical vibration mode is appropriately fixed by the terminal block 131.

The jumper wire 150 is fixed to the elliptical vibration mode in which the position of the node is fixed in a direction in which a central portion is positioned at the node of the elliptical vibration mode. That is, the stator 120 is fixed to the outer frame 130 in the direction in which the jumper wire 150 is in such a position. In other words, in the winding 122 (see FIG. 3 and the like) wound around the stator 120 in the distribution manner, the jumper wire 150 straddles a nearest neighbor location of the entire circumference of the stator core 121 at the center of the terminal block 131 corresponding to the protrusion body. It can be said that the jumper wire 150 straddles the nearest neighbor location at the node of the elliptical vibration mode.

As a result, the vibration in the elliptical vibration mode is small at the central portion of the jumper wire 150, and the end portion of the jumper wire 150 having strong vibration is positioned in a location of an antinode in which the vibration in the elliptical vibration mode is large. Accordingly, the jumper wire 150 is efficiently protected from the vibration of the motor 100, and damage to the jumper wire 150 is suppressed. Further, although the jumper wires 150 illustrated in FIG. 7 are obtained by bundling the jump wires of the UVW phases, the jumper wire 150 straddles the nearest neighbor location at the center of the terminal block 131 for each winding of the UVW phases. Due to this structure, each jumper wire 150 is more efficiently protected, and damage to the jumper wire 150 is suppressed.

### MODIFICATION EXAMPLES

An action of the terminal block 131 for fixing the position of the node of the elliptical vibration mode also occurs when an object other than the terminal block 131 is provided integrally with the outer frame 130. Hereinafter, a modification example in which the object other than the terminal block 131 is provided on the outer frame 130 will be described.

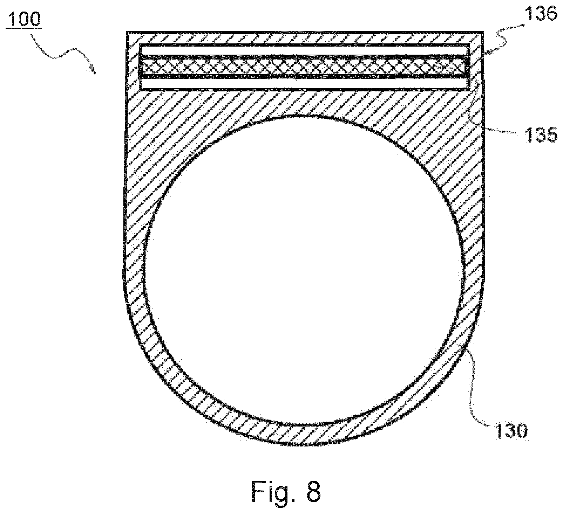

FIG. 8 is a diagram illustrating a modification example including an accommodation box.

In the modification example illustrated in FIG. 8, instead of the terminal block 131, an accommodation box 136 of an inverter 135 that supplies a current to the motor is provided at the outer frame 130 as an example of the protrusion body according to the present invention. The inverter 135 is attached to the accommodation box 136, and the accommodation box 136 corresponds to an example of an inverter attachment portion according to the present invention.

The accommodation box 136 illustrated in FIG. 8 also has a box shape, and the outer frame 130 and the accommodation box 136 are integrated. The rigidity of a part of the outer frame 130 is increased by the accommodation box 136, and the position of the node of the elliptical vibration mode is fixed near a center of the accommodation box 136. As a result, even in the case of the modification example illustrated in FIG. 8, damage to the jumper wire 150 due to vibration is suppressed.

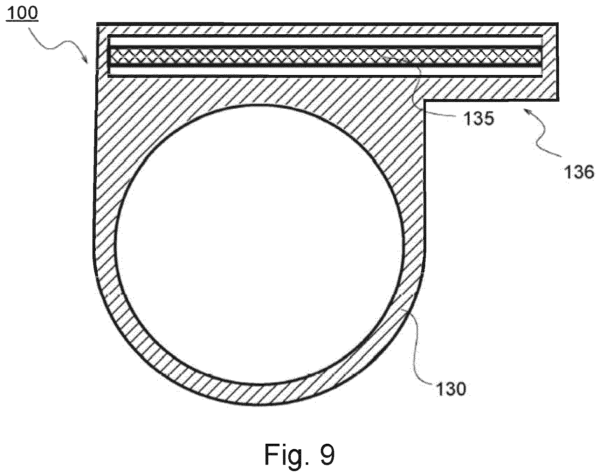

FIG. 9 is a diagram illustrating another modification example including the accommodation box.

In the modification example illustrated in FIG. 9, in order to accommodate the inverter 135 having a large size, the accommodation box 136 having a size larger than an outer diameter of the outer frame 130 is provided.

However, a size of the location where the accommodation box 136 and the outer frame 130 are connected is the same size as the modification example illustrated in FIG. 8. Thus, a portion of the outer frame 130 having high rigidity is the same as the portion in the modification example illustrated in FIG. 8, and the action for fixing the position of the node of the elliptical vibration mode also occurs as in the modification example illustrated in FIG. 8.

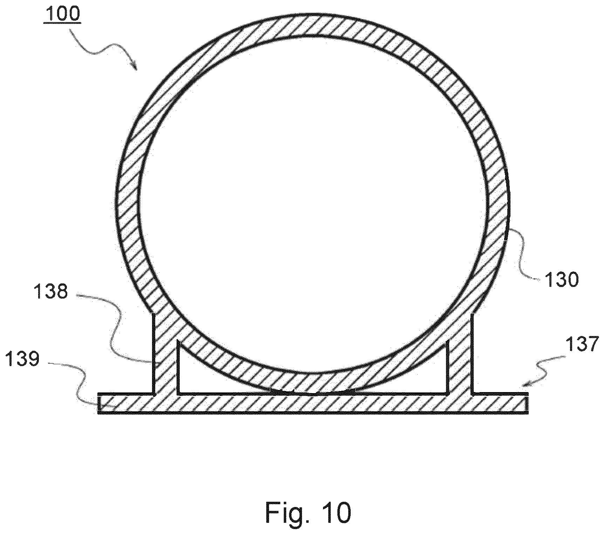

FIG. 10 is a diagram illustrating a modification example including a leg portion.

In the modification example illustrated in FIG. 10, a leg portion 137 that supports the outer frame 130 of the motor 100 is provided integrally with the outer frame 130. The leg portion 137 has two protrusion plate portions 138 protruding vertically downward from an outer peripheral surface of the outer frame 130, and a horizontal plate portion 139 that connects the protrusion plate portions 138 to each other and extends in a horizontal direction. The protrusion plate portions 138 extend in the direction along the rotation shaft of the motor 100. The horizontal plate portion 139 is welded to the outer surface of the outer frame 130 between the two protrusion plate portions 138 to firmly integrate the leg portion 137 and the outer frame 130.

The protrusion plate portions 138 correspond to an example of a plurality of wall portions according to the present invention that are integrally formed with the outer frame 130, protrude in a wall shape from the outer surface of the outer frame 130, and extend in the direction in which the outer frame 130 extends. The horizontal plate portion 139 corresponds to an example of a connection portion according to the present invention in which the plurality of wall portions are connected to each other to form the integral protrusion body. The leg portion 137 corresponds to an example of the protrusion body according to the present invention. In the example illustrated herein, the horizontal plate portion 139 extends toward the outer surface of the outer frame 130 and is integrally connected to the outer frame 130 at the central portion of the protrusion body according to the present invention.

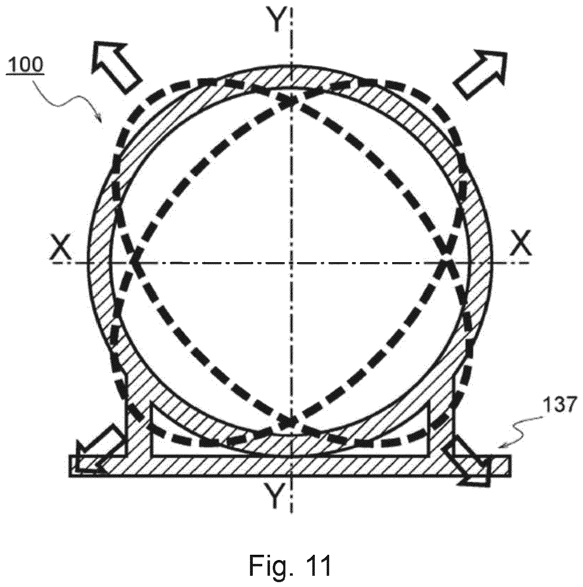

FIG. 11 is a diagram illustrating the vibration of the motor 100 according to the modification example including the leg portion.

In the motor 100 of the modification example including the leg portion 137, since the node of the elliptical vibration mode is also fixed near the center of the leg portion 137, the elliptical vibration mode vibrates greatly in the intermediate direction between the X-axis and the Y-axis, and the node of the elliptical vibration mode is generated on the axes of the axis and the Y axis. Further, as illustrated in FIG. 10, the two protrusion plate portions 138 protrude in the same direction as each other, and thus, the rigidity of the leg portion 137 is efficiently improved and the node of the elliptical vibration mode is appropriately fixed. Further, a thickness of the protrusion plate portion 138 is equal to or larger than the thickness of the outer frame 130, and thus, the rigidity of the leg portion 137 is improved and the node of the elliptical vibration mode is appropriately fixed.

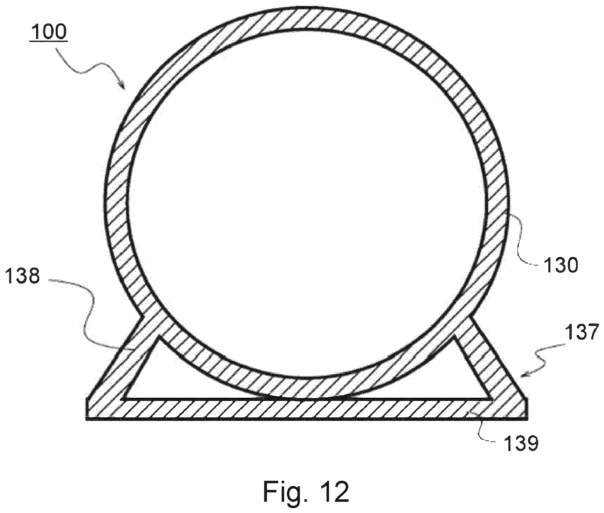

FIG. 12 is a diagram illustrating another modification example including the leg portion.

In the example of FIG. 10, the protrusion plate portions 138 of the leg portion 137 protrude from the outer frame 130 in the same direction from each other, whereas in the modification example illustrated in FIG. 12, the protrusion plate portions 138 of the leg portion 137 protrude from the outer frame 130 in a direction of extending to each other. Even when the protrusion directions of the protrusion plate portions 138 are different in this manner, the leg portion 137 having the protrusion plate portions 138 and the horizontal plate portion 139 is integrated with the outer frame 130, and thus, an action for fixing the node of the circular vibration mode occurs.

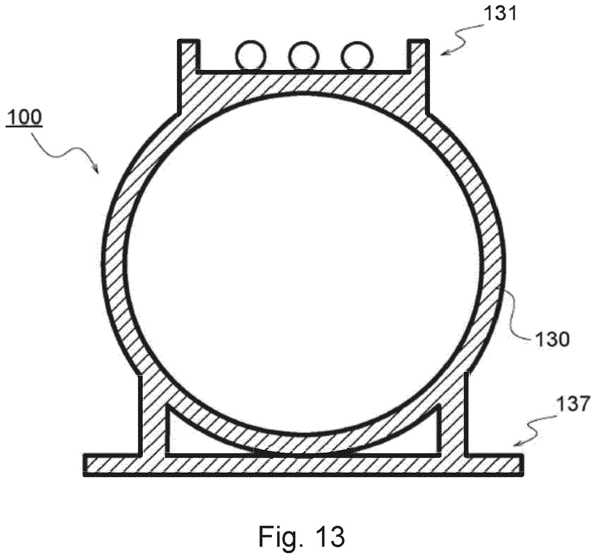

FIG. 13 is a diagram illustrating a modification example including both the terminal block and the leg portion.

In the modification example illustrated in FIG. 13, the terminal block 131 is formed for the outer frame 130, and the leg portion 137 is formed on a side opposite to the terminal block 131 with the outer frame 130 interposed therebetween. In other words, in the modification example illustrated in FIG. 13, a first protrusion body forming the leg portion 137 and a second protrusion body positioned on the side opposite to the outer frame 130 with respect to the first protrusion body are provided as the protrusion body according to the present invention. In the example of FIG. 13, the terminal block 131 corresponds to an example of the second protrusion body. The terminal block 131 and the leg portion 137 are formed at such positions, and thus, the action for fixing the node of the elliptical vibration mode works synergistically.

In the above description, although the motor having the 8-pole stator is illustrated, the motor of the present invention may be a motor having a stator having a number of poles other than the 8-pole.

It is to be considered that the embodiment described above is illustrative in all aspects, and is not restrictive. The scope of the present invention is illustrated not by the above-described embodiment but by the scope of the claims, and is intended to include all changes within the meaning and scope equivalent to the scope of claims.

### REFERENCE SIGNS LIST

- 100: motor
- 110: rotor
- 111: rotor core
- 112: rotation shaft
- 120: stator
- 130: outer frame
- 131: terminal block
- 132: vertical wall
- 133: horizontal wall
- 121: stator core
- 122: winding
- 123: return portion
- 124: tooth portion
- 125: groove portion
- 150: jumper wire
- 135: inverter
- 136: accommodation box
- 137: leg portion
- 138: protrusion plate portion
- 139: horizontal plate portion

## Claims

1. A motor comprising:
an outer frame that extends in a tubular shape;
a stator that is fixed inside the outer frame;
a plurality of wall portions that are formed integrally with the outer frame, protrude in a wall shape from an outer surface of the outer frame, and extend in a direction in which the outer frame extends;
a connection portion that connects the plurality of wall portions to form an integral protrusion body; and
windings that are wound around the stator in a distribution manner, and in which a jumper wire straddles a nearest neighbor location of an entire circumference of a core of the stator at a center of the integral protrusion body.

2. The motor according to claim 1, wherein the plurality of wall portions protrude from the outer surface of the outer frame in a same direction as each other.

3. The motor according to claim 2, wherein a height of the protrusion body in a direction in which the wall portion protrudes is at least twice a thickness of the outer frame than a highest point of the outer frame in the direction.

4. The motor according to any one of claims 1 to 3, wherein the connection portion protrudes in a wall shape from the outer surface of the outer frame, and extends in a direction of orbiting the outer frame.

5. The motor according to any one of claims 1 to 3, wherein the connection portion extends to face the outer surface of the outer frame, and is connected integrally with the outer frame at a central portion of the protrusion body.

6. The motor according to any one of claims 1 to 5, wherein the plurality of wall portions have a length equal to or longer than the core of the stator in the direction in which the outer frame extends.

7. The motor according to any one of claims 1 to 6, wherein the protrusion body extends in a direction of orbiting the outer frame by 80 degrees or more as viewed from a center of rotation of the motor.

8. The motor according to any one of claims 1 to 6, wherein the protrusion body extends in a direction of orbiting the outer frame by 90 degrees or more as viewed from a center of rotation of the motor.

9. The motor according to any one of claims 1 to 8, further comprising:
windings of n phases (n is an integer of 3 or more) as the windings,
wherein a jumper wire straddles the nearest neighbor location for all the windings.

10. The motor according to any one of claims 1 to 9, wherein the protrusion body forms a drawing portion that draws an end portion of the winding to an outside of the outer frame.

11. The motor according to any one of claims 1 to 9, wherein the protrusion body forms an inverter attachment portion to which an inverter that supplies a current to the motor is attached.

12. The motor according to any one of claims 1 to 11, wherein the protrusion body forms a leg portion that supports the outer frame.

13. The motor according to claim 12, wherein a wall portion of the protrusion body forming the leg portion has a thickness equal to or more than a thickness of the outer frame.

14. The motor according to any one of claims 12 to 13, wherein a first protrusion body forming the leg portion and a second protrusion body positioned on a side opposite to the outer frame with respect to the first protrusion body are provided as the protrusion body.

15. A motor comprising:
an outer frame that has an inner peripheral surface extending in a cylindrical shape;
an annular stator that is fitted into the outer frame; and
windings that are wound around the annular stator in a distribution manner, and in which a jumper wire straddles a nearest neighbor location of an entire circumference of the annular stator at a node of an elliptical vibration mode generated in the outer frame.

16. The motor according to claim 15, further comprising:
a rigidity increasing portion that is provided at a part of the outer frame and fixes the node of the elliptical vibration mode generated in the outer frame by increasing rigidity of the part.
